# DEMANDE DE BREVET EUROPEEN

(11) **EP 0 650 283 A1**
(43) Date de publication de la demande: **26.04.1995**
(21) Numéro de dépôt: 94402171.6
(22) Date de dépôt: 29.09.1994
(51) Int. Cl.: H04M 1/274

(54) **Annuaire et composeur téléphonique portatif comportant un dispositif de reconnaissance de parole**

(30) Priorité: 21.10.1993 FR 9312583
(71) Demandeur: Talvard, Jean-Pierre, F-91250 Saint Germain Les Corbeil (FR); Seydoux, Henri, F-75011 Paris (FR)
(72) Inventeur: Talvard, Jean-Pierre, F-91250 Saint Germain Les Corbeil (FR); Seydoux, Henri, F-75011 Paris (FR)
(74) Mandataire: Dupuis-Latour, Dominique

(57) **Abrégé**

Cet appareil comporte : une mémoire contenant une série de numéros d'appel ; des moyens d'adressage de cette mémoire ; des moyens composeurs, propres à transformer le numéro adressé en une séquence de signaux multifréquence ; et un premier transducteur (5), propre à transformer cette séquence en signaux acoustiques et susceptible d'être couplé à un microphone de combiné téléphonique.

Selon l'invention : la mémoire contient en outre, pour chaque numéro, au moins une signature vocale associée ; il est prévu un second transducteur (4), propre à capter un nom recherché énoncé par l'utilisateur ; il est prévu des moyens de reconnaissance vocale, propres à analyser le nom capté et le transformer en une signature vocale associée ; et les moyens d'adressage comprennent des moyens associateurs, propres à retrouver dans la mémoire une information correspondant à celle fournie par les moyens de reconnaissance vocale et adresser la mémoire sur la position correspondante.

## Description

L'invention concerne un appareil autonome indépendant formant annuaire et composeur téléphonique.

Les appareils connus de ce type se présentent généralement sous la forme de calculettes perfectionnées, pourvues d'un clavier alphanumérique et d'un petit haut-parleur permettant l'émission automatique des fréquences vocales (DTMF) correspondant aux différents chiffres du numéro téléphonique.

L'ergonomie de ces appareils se révèle en pratique assez médiocre, dans la mesure où l'enrichissement et la mise à jour de l'annuaire comme la recherche du numéro téléphonique sont assez longs et fastidieux : il faut frapper le nom de la personne ou une partie du nom sur un clavier alphanumérique comportant un très grand nombre de touches sur un espace très restreint, et suivant des procédures relativement complexes à retenir pour un utilisateur simplement occasionnel.

En outre, ces appareils sont quasi-impossibles à utiliser d'une seule main puisque l'autre main tient le combiné téléphonique, etc. La manipulation délicate et fastidieuse, ainsi que le temps assez long pour retrouver et composer un numéro explique le succès très modéré de ces appareils et le fait que les utilisateurs reviennent très souvent au bout de quelque temps à l'agenda classique sur papier.

L'un des buts de la présente invention est de proposer un appareil de ce type présentant une ergonomie très supérieure, avec notamment les propriétés suivantes :
- Simplicité d'utilisation : l'utilisation doit être au minimum aussi simple que celle d'un annuaire papier, en s'affranchissant de la multitude de touches et de boutons des appareils connus ; à cet égard, on verra que l'appareil de l'invention, en fonctionnement normal, ne nécessite la manipulation que d'un seul et unique bouton pour retrouver le numéro du correspondant et composer celui-ci, et que la mémorisation de nouveaux numéros ne nécessite qu'un clavier numérique et un nombre très réduit de touches de fonction, ce qui permet, à surface égale, d'augmenter la taille des touches et de l'écran afin de les rendre plus agréables à utiliser par l'utilisateur.
- Universalité : l'appareil doit accompagner son propriétaire en tous lieux et doit être utilisable sur tout téléphone : poste téléphonique de bureau, cabine publique, radiotéléphone, etc., en conservant des dimensions et un poids très faibles, du même ordre que ceux d'une calculette, afin que l'appareil reste un objet "de poche".
- Sûreté du fonctionnement : il est indispensable d'éviter tout risque de confusion entre deux correspondants ayant, par exemple, des noms voisins. On verra à cet égard que l'appareil de l'invention permet une excellente discrimination entre les noms de correspondants et que, en outre, il répète systématiquement le nom qu'il a trouvé afin de permettre à l'utilisateur de le vérifier et d'éviter ainsi toute ambiguïté et fausse numérotation.
- Rapidité : pour que l'appareil présente un avantage décisif par rapport à un annuaire papier, il doit être possible de l'interroger, de retrouver le nom et de composer le numéro de téléphone correspondant en une durée très brève. On verra que l'appareil de l'invention permet de réaliser l'ensemble de ces opérations en un intervalle de temps de l'ordre de 2 à 3 s, sans commune mesure avec ce que permettent les appareils connus ou les annuaires papier.

Comme on le verra par la suite, la présente invention permet de concilier parfaitement ces différents impératifs grâce à l'utilisation d'un concept original, qui est celui de l'utilisation de la reconnaissance vocale pour la fonction de recherche dans l'annuaire téléphonique, l'ensemble étant avantageusement doublé de fonctions de synthèse vocale pour guider l'utilisateur dans la manipulation de l'appareil.

La reconnaissance vocale est une technique en elle-même connue, mais qui avait été jusqu'à présent limitée à des applications très spécifiques telles que la conduite de tir, la commande d'appareils pour handicapés, etc. C'est cependant une technique très bien adaptée à l'application particulière envisagée par la présente invention, dans la mesure où le locuteur est généralement unique (le propriétaire de l'objet, qui l'emporte avec lui et est habituellement seul à l'utiliser), et où il énonce des mots isolés et près du micro, donc à l'abri des bruits ambiants, ce qui permet en pratique un taux de reconnaissance de l'ordre de 90 %, révélant une très grande efficacité dans l'application envisagée.

Plus précisément, l'appareil de l'invention est, comme on l'a indiqué, du type général comportant : une mémoire de données, contenant une série de numéros d'appel de correspondants ; des moyens d'adressage sélectif de cette mémoire ; des moyens composeurs, propres à transformer le numéro d'appel adressé de la mémoire en une séquence correspondante de signaux multifréquence d'appel ; et un premier transducteur acoustique, propre à transformer cette séquence de signaux multifréquence en signaux acoustiques, ce transducteur étant susceptible d'être couplé à un microphone de combiné téléphonique,

Conformément à la présente invention, il est caractérisé en ce que : la mémoire contient en outre, pour chaque numéro d'appel, au moins une information de signature vocale associée ; il est prévu un second transducteur acoustique, propre à capter un nom de correspondant recherché énoncé par l'utilisateur de l'appareil ; il est prévu des moyens de reconnaissance vocale, propres à analyser le nom de correspondant capté par le second transducteur et le transformer en une signature acoustique vocale associée ; et les moyens d'adressage comprennent des moyens associateurs, propres à retrouver dans la mémoire une information de signature acoustique vocale correspondant à celle fournie par les moyens de reconnaissance vocale et, en cas de concordance, adresser la mémoire sur la position correspondante.

Selon un certain nombre de caractéristiques subsidiaires préférentielles :
- il est prévu des moyens à synthèse vocale, propres à générer en réponse un nom mémorisé de correspondant à partir de la signature vocale retrouvée dans la mémoire par les moyens associateurs, de manière à permettre un contrôle par l'utilisateur de l'appareil ;
- après adressage de la mémoire et génération éventuelle du nom de correspondant pour contrôle par l'utilisateur de l'appareil, les moyens composeurs ne sont activés qu'après que l'utilisateur ait actionné une commande spécifique de confirmation, de préférence un bouton-poussoir placé sur cet appareil en une position permettant son actionnement par un doigt de la main tenant l'appareil de manière à permettre, pour la recherche et la composition du numéro retrouvé, une utilisation de l'appareil d'une seule main et sans autre manoeuvre que celle consistant à énoncer le nom recherché et actionner le bouton-poussoir ; ce bouton-poussoir peut notamment être un bouton à deux positions, enfoncée et relâchée, et dans lequel un enfoncement du poussoir active les moyens de reconnaissance vocale et un relâchement de celui-ci active les moyens composeurs, cet enfoncement et ce relâchement étant séparés par au moins une étape d'énonciation du nom recherché par l'utilisateur et de reconnaissance fructueuse de ce nom par les moyens de reconnaissance vocale ;
- dans ce dernier cas, on peut avantageusement prévoir de n'activer le second transducteur acoustique que tant que le bouton-poussoir est maintenu enfoncé pendant l'étape d'énonciation du nom recherché ;
- au cas où les moyens associateurs ne retrouvent dans la mémoire aucune information de signature acoustique vocale correspondant à celle fournie par les moyens de reconnaissance vocale, les moyens à synthèse vocale émettent un message d'anomalie prédéterminé ;
- pour introduire dans la mémoire des numéros de correspondant, il est prévu un clavier numérique, des touches de dialogue et une commande spécifique de passage en mode mémorisation et exploitation - avantageusement constituée par un contact d'ouverture d'un volet d'occultation du clavier numérique et des touches de dialogue -, actionnée par l'utilisateur au cas où les moyens associateurs ne retrouvent dans la mémoire aucune information de signature acoustique vocale correspondant à celle fournie par les moyens de reconnaissance vocale, ou dans le cas où le nom retrouvé ne correspond pas à celui voulu par l'utilisateur ;
- dans ce cas, on prévoit de préférence que la signature acoustique vocale mémorisée après actionnement de la commande spécifique de passage en mode mémorisation et exploitation est celle correspondant au nom énoncé en premier lieu par l'utilisateur, cette signature vocale de référence étant mémorisée temporairement au cas où l'utilisateur énoncerait successivement plusieurs noms avant d'actionner cette commande ;
- l'appareil comprend en outre des moyens pour mémoriser une pluralité d'échantillons vocaux, successivement acquis par les moyens de reconnaissance vocale, d'un même nom de correspondant, pour comparer ces échantillons mémorisés à un nouvel échantillon acquis et pour supprimer les échantillons les moins proches des autres et/ou les moins utilisés au cours des comparaisons successives ;
- la mémoire de données, outre des numéros d'appel de correspondant, contient des codes numériques de type mot de passe.

D'autres caractéristiques et avantages de l'invention apparaîtront à la lecture de la description détaillée ci-dessous, faite en référence aux dessins annexés.

La figure 1 est une vue de face de l'appareil de l'invention, couvercle fermé, c'est-à-dire en mode normal d'utilisation (recherche et composition d'un numéro connu).

La figure 2 est une vue de dos de ce même appareil.

La figure 3 est homologue de la figure 1, mais avec le couvercle ouvert, correspondant à un mode de mémorisation.

La figure 4 est un diagramme schématique par blocs des différents éléments constituant les circuits de l'appareil de l'invention.

La figure 5 est un schéma par blocs détaillant les différents éléments fonctionnels du circuit numérique du schéma de la figure 4.

Les figures 6 à 9 illustrent les différentes étapes de l'utilisation de l'appareil en mode de recherche et composition du numéro.

Les figures 10 à 13 illustrent les différentes étapes de l'utilisation de l'appareil en mode de mémorisation.

La figure 14 illustre, sous forme de schéma par blocs, une variante particulière de réalisation des moyens de reconnaissance vocale mêlant logiciel et matériel de façon à en accroître les performances tout en en simplifiant la réalisation pratique.

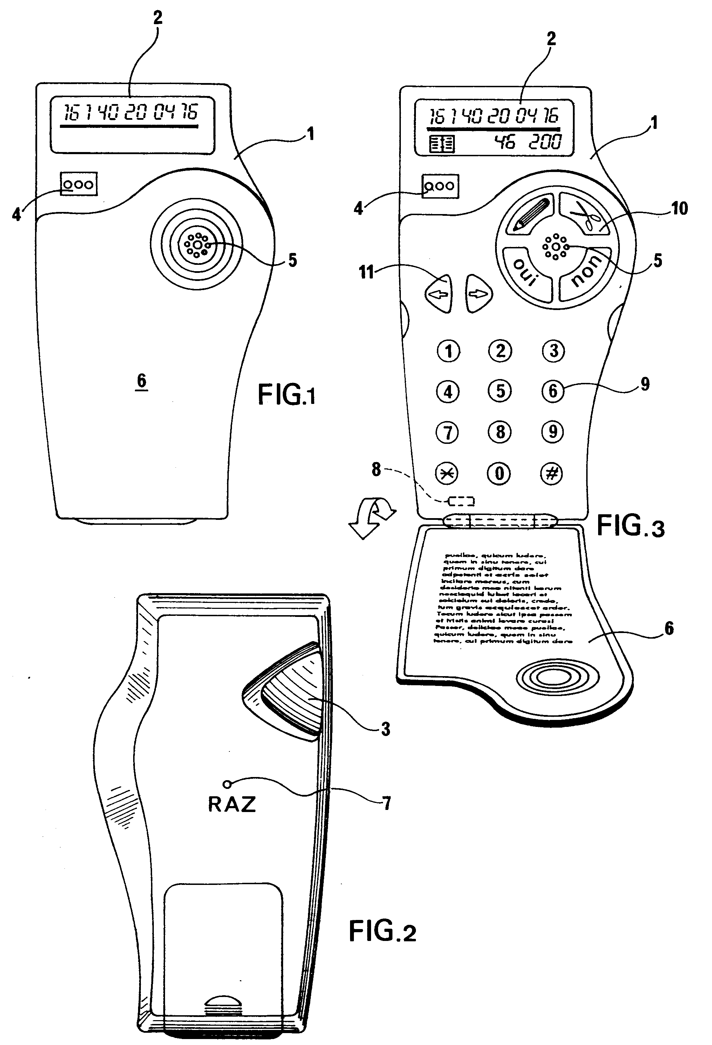

L'appareil, illustré sur les figures 1 à 3, comporte essentiellement un boîtier 1 avec un écran 2 (qui, dans la version illustrée, comporte deux lignes de seize caractères avec une icône), un bouton-poussoir 3 situé en face arrière (et appelé par la suite, simplement, le "bouton" de l'appareil), un microphone 4 et un haut-parleur 5. Ces éléments sont les seuls éléments apparents lorsque, comme illustré sur les figures 1 et 2, l'appareil est en position normale d'utilisation simple, c'est-à-dire avec un couvercle 6 fermé.

On notera que, sur les dessins, on a donné au boîtier 1 une forme *ad hoc* lui permettant d'être aisément pris en main, le boîtier étant tenu dans la paume de la main droite de manière que l'extrémité de l'index vienne appuyer à l'endroit du bouton 3, permettant ainsi une utilisation d'une seule main, de façon naturelle et instinctive, semblable à celle consistant à "cliquer" avec le bouton d'une souris d'ordinateur. Le boîtier peut également être tenu dans la main gauche et le bouton 3 actionné par le pouce.

La référence 7 désigne un micro-interrupteur actionnable par une épingle pour une remise à zéro physique générale du processeur. Une telle action, qui entraîne une perte totale des données, peut être toutefois nécessaire en cas d'anomalie exceptionnelle (parasites, perte d'un code secret, piles épuisées, etc.). On peut également prévoir une possibilité de relance de l'appareil, sans perte des données, par exemple par appui simultané sur deux touches.

En position ouverte (figure 3), le volet 6, qui est articulé sur une charnière, laisse apparaître un clavier numérique (les douze touches du clavier téléphonique standard) ainsi qu'un nombre réduit de touches de fonctions, par exemple (touches 10) deux touches de réponse "OUI" et "NON" (pour répondre aux questions de l'appareil, qu'elles soient affichées sur l'écran 2 ou énoncées par le haut-parleur 5), une touche de suppression symbolisée par une paire de ciseaux, une touche de modification symbolisée par un crayon-gomme et (touches 11) deux touches de déplacement symbolisées par une flèche droite et une flèche gauche. On expliquera par la suite l'utilisation exacte de ces touches, qui servent uniquement dans les modes de mémorisation, de correction, de suppression et d'exploration de l'annuaire.

L'ouverture du couvercle 6 est détectée par un interrupteur interne 8, par exemple un interrupteur à lame souple activé par un petit aimant moulé dans le couvercle.

Bien entendu, diverses fonctions telles qu'affichage de la date et de l'heure, alarme de rendez-vous, calculatrice, etc. peuvent être intégrées dans l'appareil. Ces fonctions sont en elles-mêmes connues et sans incidence sur le fonctionnement de l'appareil en agenda et composeur téléphonique ; elles ne seront donc pas décrites plus en détail.

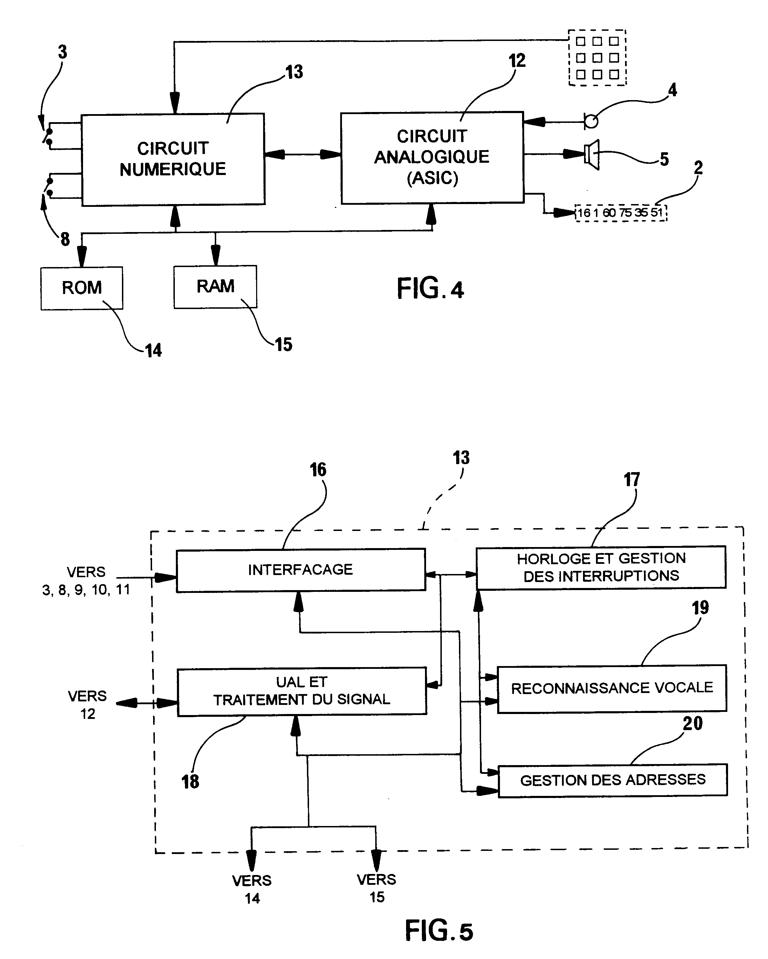

Les figures 4 et 5 décrivent, sous forme de schéma par blocs, les différents éléments internes de l'appareil.

Comme on peut le voir sur la figure 4, celui-ci est essentiellement organisé autour de quatre blocs fonctionnels correspondant à quatre composants distincts, à savoir un circuit analogique 12, un circuit numérique 13, une mémoire morte (ROM) 14 et une mémoire vive (RAM) 15. Le circuit analogique 12 est un circuit spécifique (ASIC) destiné à gérer, de façon en elle-même connue, les entrées et sorties, à savoir : en entrée, les signaux du microphone 4, qui sont échantillonnés et numérisés par le circuit analogique pour transmission au circuit numérique 13 ; en sortie, le pilotage du haut-parleur 5 à partir des échantillons numériques délivrés par le circuit numérique 1, et le pilotage des différents pixels de l'écran 2.

Le circuit numérique 13, quant à lui, comme illustré figure 5, comporte une unité d'interfaçage 16 avec l'extérieur, qui reçoit les différents signaux issus des touches 9, 10 et 11 du clavier et des contacts 3 et 8, une unité d'horloge et de gestion des interruptions 17, une unité arithmétique et logique et de traitement du signal 18 coopérant notamment avec le circuit analogique 12, une unité de reconnaissance vocale 19 et une unité de gestion des adresses 20. Ces différents blocs sont reliés entre eux et aux mémoires externes 14 et 15.

La synthèse vocale est assurée par le circuit numérique en utilisant des techniques connues de compactage de signaux vocaux telles que les techniques ADPCM (codage par prédiction de pente) ou LPC (codage par factorisation d'ondes stationnaires voisines). Le codage peut être fait en temps différé lors de la mémorisation des signatures vocales, le décodage se faisant en temps réel par lecture des tables de prédiction de pente dans le premier cas, ou par filtre récursif dans le second cas.

Le circuit numérique 13 peut être notamment réalisé par un microprocesseur de traitement du signal (DSP), ou tout autre microprocesseur suffisamment rapide pour exécuter les algorithmes (connus) de reconnaissance vocale, de codage de la voix et de synthèse vocale, ainsi que les algorithmes (classiques) de gestion de la mémoire de masse, de gestion du temps réel et du programme d'application.

On explicitera notamment, en fin de description, une variante particulière de réalisation des moyens de reconnaissance vocale mêlant logiciel et matériel de façon à accroître les performances (essentiellement le temps de recherche et de reconnaissance) tout en simplifiant la réalisation pratique.

Le logiciel d'application est organisé de façon modulaire à partir d'un ensemble d'automates correspondant chacun à une partie précise de l'application : prise en main de l'application (séquence d'apprentissage lors de la première utilisation), reconnaissance et composition (fonctionnement couvercle fermé), exploitation de l'annuaire, mémorisation d'un nouveau nom, saisie d'un numéro de téléphone et traitement des erreurs.

D'autres automates peuvent également être adjoints pour des fonctionnalités annexes : mode d'emploi interactif, numération internationale (*infra*), transfert de données à un autre appareil du même type ou à un ordinateur, etc.

Tous ces automates fonctionnent suivant la même syntaxe, à savoir qu'ils reçoivent deux paramètres (une commande et un paramètre optionnel) et retournent une valeur booléenne selon qu'ils gardent la main ou passent la main (respectivement "VRAI" ou "FAUX").

Les commandes sont de quatre types :
- commandes internes à l'automate : démarrage, demande d'arrêt, suspension et redémarrage ;
- commandes du clavier : une commande pour chaque touche du clavier numérique 9, du clavier de touches de fonction 10 et 11 et une pour le bouton 3 ;
- commandes de reconnaissance et de synthèse de la parole : mots reconnus, mots prononcés mais non reconnus, erreurs (mot trop fort, trop long ou qui n'est pas de la parole), fin de synthèse et fin de numérotation ;
- événements matériels : fermeture/ouverture du clavier, système inactif depuis plusieurs secondes (par exemple depuis plus de 5 s), batterie faible.

Les automates, en fonction des commandes reçues et de leur état interne, choisissent d'exécuter une procédure de service (*infra*) en fonction de ces paramètres et, après exécution de cette procédure, changent d'état ou rendent la main à l'automate qui la leur a passée (et qui, quant à lui, attend qu'on lui rende la main).

Les procédures de services appelés par les automates sont de cinq types :
- gestion de la base de données ;
- chaînage des données ;
- gestion de la reconnaissance/synthèse de la parole ;
- gestion de la mémoire ;
- statistiques.

Ces différentes procédures sont programmées de manière à exécuter les différentes opérations que l'on décrira en détail plus loin dans la présente description (*infra*, séquences d'utilisation) ; l'écriture des diverses procédures à partir de la description des séquences étant à la portée du spécialiste de cette technique, on ne donnera pas le détail du contenu du programme de ces différentes procédures, de même que celui des automates qui les appellent.

Les procédures de service, considérées isolément, sont en elles-mêmes classiques dans les fonctions qu'elles réalisent.

En ce qui concerne la reconnaissance vocale, le microprocesseur lit dix mille fois par seconde les données provenant d'un convertisseur analogique/numérique de douze, quatorze ou seize bits de résolution. Ces données peuvent être filtrées pour renforcer le fréquences aiguës, puis pondérées avec l'échantillon précédent (fenêtre de Hamming). Le processeur effectue ensuite, quarante fois par seconde, une transformation de Fourier rapide (FFT) par un algorithme optimisé tels que ceux de Cooley-Turkey ou Good. La transformée de Fourier donne la quantité d'énergie du signal pendant la durée d'échantillonnage sur seize bandes de fréquences (par exemple), distribuée de manière exponentielle entre 200 Hz et 4200 Hz ; ce résultat est appelé "vecteur de recherche" d'1/40^{e} de seconde de parole. Après cette phase d'analyse du signal, le processeur exécute la phase de reconnaissance proprement dite : les vecteurs de chacun des mots connus étant conservés en mémoire, le processeur compare le vecteur qu'il reçoit tous les 1/40^{e} de seconde à ceux des mots en mémoire en utilisant une matrice de programmation dynamique. La comparaison s'effectue par calcul de différences de distances arithmétiques ; en parcourant les vecteurs, on sait, lorsque six vecteurs de silence (préalablement définis) successifs ont été détectés (fin de mot), quel est l'ensemble de vecteurs formant un mot dont la somme des distances arithmétiques entre vecteurs mémorisés et vecteurs analysés est la plus faible.

En ce qui concerne les autres procédures de service, on indiquera seulement qu'il est possible, en complément des fonctions habituelles, de prévoir une consolidation de la base de données permettant d'améliorer au fil des prononciations successives des mots la reconnaissance de la parole.

À cet effet, lorsque la place mémoire est suffisante (par exemple lorsqu'il reste de la place pour au moins dix échantillons), lorsque l'appareil apprend un nouveau nom, il conserve en mémoire les cinq premiers échantillons du nom lors des cinq premières reconnaissances. Pendant les cinq reconnaissances suivantes, il repère ceux des échantillons qui ont eu la meilleure et la plus mauvaise note de reconnaissance. À la cinquième reconnaissance, les trois échantillons qui ont eu la plus mauvaise note sont supprimés, et pendant les trois reconnaissances suivantes, l'appareil conserve les nouveaux échantillons. La séquence reprend alors, pendant les cinq reconnaissances suivantes, de la manière indiquée plus haut, et ainsi de suite. Lorsque la place mémoire diminue et qu'il n'est plus possible d'exécuter l'algorithme ci-dessus, on fait une passe générale sur l'ensemble des échantillons et on supprime la référence la moins utilisée de chacun des mots. Si la place mémoire utilisée n'est toujours pas suffisante, on supprime un échantillon et ainsi de suite jusqu'à ne conserver qu'un seul échantillon par nom et optimiser ainsi l'occupation de la mémoire.

On notera que ces algorithmes de consolidation permettent à l'utilisateur de s'adapter progressivement à sa machine car, au début, le nombre d'échantillons conservés pour un mot est maximum, ce qui est particulièrement intéressant lorsque l'utilisateur n'a pas encore parfaitement acquis une prononciation uniforme des noms.

Le fonctionnement de l'ensemble des procédures et automates est coordonné par une boucle de supervision (correspondant au bloc fonctionnel 17) qui génère une interruption temps réel toutes les 25 ms en tâche de fond. Sur cette tâche de fond, une routine exécute trois sous-programmes :
- un premier programme scrute les différents capteurs (clavier, touches de fonction, bouton, ouverture du capot, signal sur le microphone, batterie faible) et, si un changement d'état est détecté, la tâche de fond poste un événement correspondant dans un tampon en anneau (tampon d'événement) ;
- un deuxième programme scrute l'état des sous-programmes de supervision de l'acquisition, de l'analyse, du parcours de la matrice de programmation dynamique, de la synthèse et de la numérotation DTMF et leur passe la main s'il y a lieu ; ces sous-programmes posteront un événement correspondant dans le tampon d'événement pour prise en compte par l'application ;
- un troisième programme scrute les tampons de synthèse de la parole et, si un traitement est achevé, poste un événement correspondant dans le tampon d'événement.

La boucle principale de supervision tourne en rond sur la lecture du tampon d'événement et, si un événement à traiter est repéré, il est transféré à l'automate actif; dans le cas contraire, on met l'appareil en sommeil jusqu'à la prochaine interruption temps réel de façon à optimiser l'utilisation des batteries.

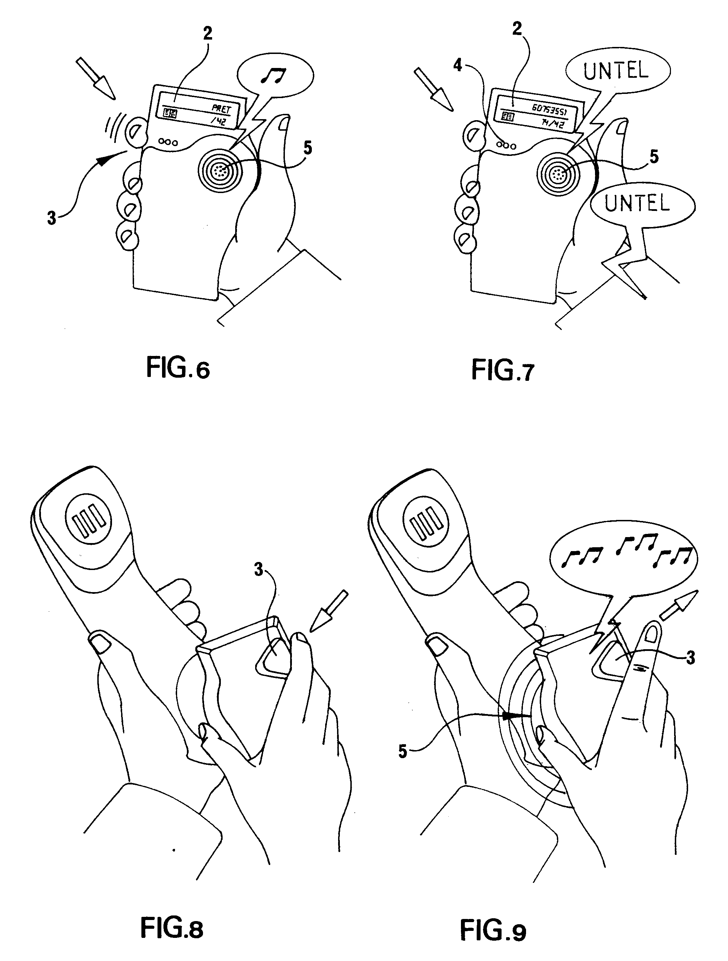

On va maintenant décrire les diverses séquences d'utilisation possibles de l'appareil de l'invention mises en oeuvres par la configuration logicielle (automates, procédures de service, routine de supervision, etc.) que l'on vient de citer, en référence notamment aux figures 6 à 13.

### 1°) Séquence d'utilisation normale, pour un nom connu de l'appareil (fonctionnement couvercle fermé) (figures 6 à 9)

L'utilisateur saisit l'appareil et appuie sur le bouton 3. L'appareil émet alors un "bip" sonore et affiche sur la première ligne un message "PARLEZ" et sur la seconde ligne un message "/42" indiquant le nombre de noms conservés en mémoire dans l'annuaire (figure 6).

L'utilisateur approche alors le micro de sa bouche et énonce le nom qu'il veut rechercher (*"UNTEL"*). Si le nom est connu de l'appareil et qu'il a été correctement prononcé, celui-ci va répéter en écho, par synthèse vocale sur son haut-parleur, le nom qu'il a trouvé dans l'annuaire (*"UNTEL"*) et afficher, sur la première ligne, le numéro de téléphone correspondant et, sur la seconde ligne, un message "14/42", par exemple, indiquant qu'il s'agit du quatorzième nom de l'annuaire, qui en comporte quarante-deux (figure 7).

Si l'on suppose que le nom reproduit par l'appareil est bien le nom qui a été prononcé et que l'utilisateur souhaite appeler, ce dernier approche alors le haut-parleur de l'appareil du microphone du combiné téléphonique, tout en maintenant toujours enfoncé le bouton 3 (figure 8).

Il relâche alors le bouton, ce qui a pour effet de provoquer l'émission des fréquences vocales permettant la composition du numéro de correspondant (figure 9).

Pour un meilleur confort d'utilisation, il n'est pas nécessaire que l'utilisateur maintienne en permanence le bouton enfoncé; il peut "cliquer" (appuyer et relâcher rapidement le bouton) ... parler ... puis "cliquer" à nouveau pour numéroter. En d'autre termes, on ne détecte pas les positions (enfoncé ou non) du bouton, mais seulement les transitions d'une position à l'autre. Ceci permet aussi de répéter la numérotation en "cliquant" une fois de plus, par exemple si l'appareil n'a pas été approché assez près du combiné à la première numérotation.

La possibilité de maintenir en permanence le bouton enfoncé peut être toutefois intéressante dans des environnements bruyants, le micro de l'appareil n'étant activé que tant que le bouton est maintenu enfoncé pendant l'étape d'énonciation du nom recherché.

Bien entendu, l'utilisateur conserve toujours la possibilité de composer le numéro en se servant du clavier du poste téléphonique à partir du numéro présenté sur l'afficheur de l'appareil ; cette possibilité permet en particulier de se servir de l'appareil même avec les anciens centraux téléphoniques requérant une numérotation par impulsions.

D'autre part, le numéro présenté sur l'afficheur peut ne pas être un numéro de téléphone : il peut par exemple s'agir de retrouver un code secret associé à une carte bancaire, un code de porte d'entrée, un mot de passe (numérique) de serveur télématique, etc., l'utilisateur mémorisant ce code dans l'appareil en le composant au clavier et en lui associant un nom fictif, bien plus facile à mémoriser qu'un code numérique.

### 2°) Séquence d'utilisation normale, au cas où l'appareil propose un nom erroné (figures 6 à 10)

La séquence opératoire est la même que ci-dessus, à la différence près que le nom énoncé en réponse par l'appareil n'est pas celui que l'utilisateur voulait retrouver ; en d'autres termes, l'appareil a reconnu un nom, mais ce n'est pas le bon (le nom peut avoir été mal prononcé par l'utilisateur, ou bien être absent de l'annuaire, mais ressembler à un nom déjà connu).

Dans ce cas, l'utilisateur peut faire une ou plusieurs autres tentative, en améliorant la prononciation par exemple. Une nouvelle analyse du nom est effectuée, et l'appareil peut proposer soit un autre nom (qui peut correspondre au nom recherché, auquel cas la procédure se poursuit comme décrit à la rubrique précédente) soit toujours le même nom.

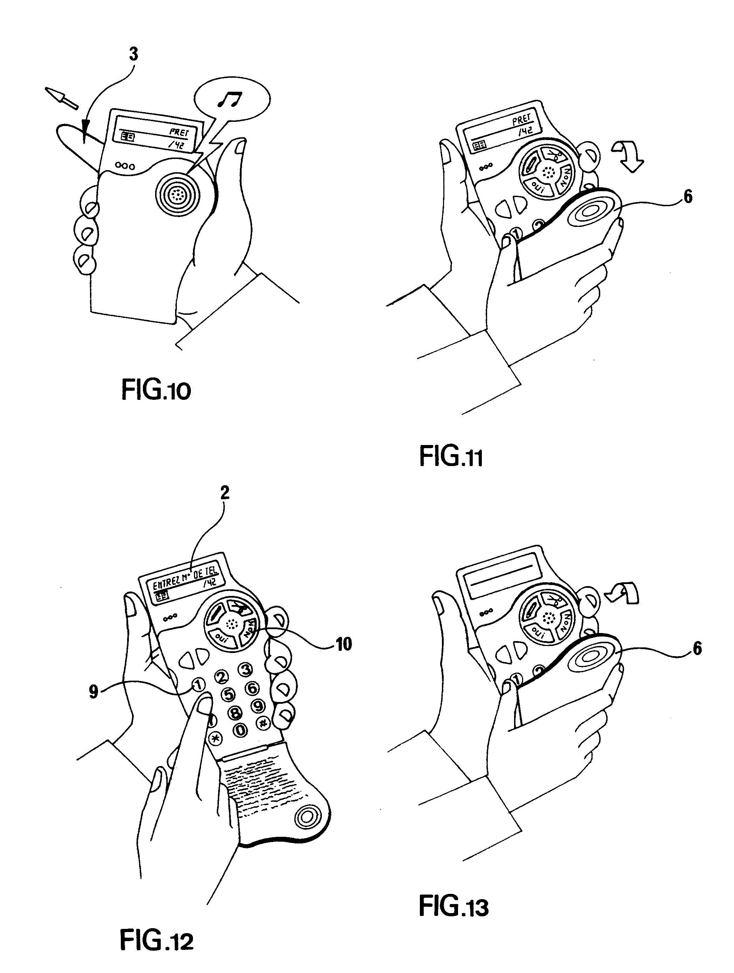

Dans ce dernier cas l'utilisateur peut alors ouvrir le couvercle pour apprendre le nouveau nom à l'appareil, de la manière qui sera décrite plus bas. S'il ne souhaite pas poursuivre, il peut abandonner l'utilisation, par exemple en relâchant le bouton 3 si celui-ci est toujours enfoncé, provoquant ainsi une numérotation dans le vide (figure 10). Si le couvercle a été ouvert avant que le bouton ne soit relâché, aucune numérotation n'interviendra.

Ici encore, pour un meilleur confort d'utilisation, il n'est pas nécessaire que l'utilisateur maintienne en permanence le bouton enfoncé ; il peut cliquer sur le bouton ... parler ... reparler s'il le souhaite .... Ceci évite les numérotations dans le vide.

### 3°) Séquence d'utilisation normale, dans le cas où le nom est inconnu de l'appareil (figures 6 à 10)

Dans ce cas, l'appareil, qui n'a trouvé dans l'annuaire aucun nom proche, émettra un message "*Je ne connais pas UNTEL"*, et affichera "INCONNU" sur la première ligne de l'écran. L'utilisateur pourra, ici encore, ouvrir le couvercle pour apprendre le nom à l'appareil.

### 4°) Séquence de mémorisation d'un nom inconnu (fig. 11 à 13)

L'utilisateur ouvre le couvercle 6 (figure 11), activant ainsi le capteur 8 et indiquant aux circuits de l'appareil qu'il souhaite opérer une rupture de la séquence éventuellement en cours pour passer à une séquence de mémorisation.

L'appareil va alors énoncer un message "*voulez-vous apprendre le nom UNTEL"* et afficher sur l'écran "APPRENDRE ?" sur la première ligne et "/42" sur la seconde ligne. De préférence, le nom répété par l'appareil est celui énoncé en premier lieu par l'utilisateur, nom qui a été conservé en mémoire même si d'autres essais ont été effectués ensuite.

L'utilisateur, avec les touches de fonctions 5, répond "OUI" (à moins qu'il ne se ravise et appuie alors sur la touche "NON").

L'appareil énonce alors un message *"entrez son numéro de téléphone*" et affiche ce même message sur l'écran.

L'utilisateur compose alors le numéro de téléphone correspondant sur le clavier numérique 9 (figure 12).

L'appareil confirme alors la bonne exécution de la procédure en énonçant un message *"le nom UNTEL a été appris"* et en affichant sur l'écran le numéro introduit sur la première ligne et "12/43" sur la seconde ligne, indiquant qu'un nom a été ajouté en douzième position à l'annuaire, qui en comprend maintenant quarante-trois.

En ce qui concerne la position des rubriques dans l'annuaire, on peut en effet trier ceux-ci par exemple par nombre de chiffres du numéro (les numéros à huit chiffres étant rangés avant ceux à neuf chiffres, etc.) puis par ordre numérique, permettant ainsi de distinguer les zones géographiques, ce qui sera commode pour parcourir l'annuaire.

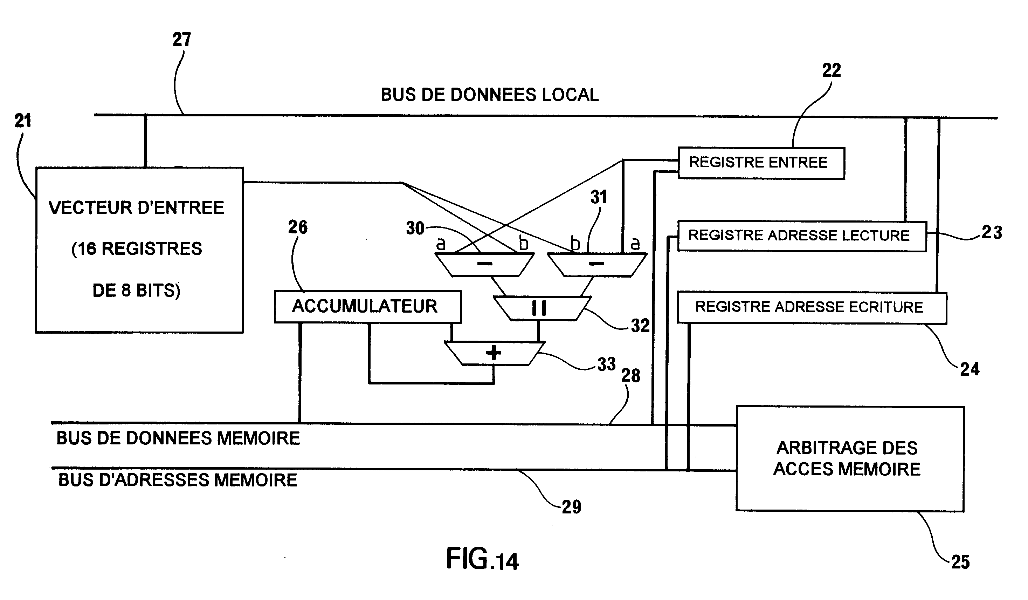

L'utilisateur referme alors le couvercle 6 (figure 13) et peut reprendre la séquence n°1 pour composer le nouveau numéro appris s'il le désire ; dans le cas contraire, l'appareil s'éteint automatiquement au bout d'un temps donné, par exemple cinq secondes.

### 5°) Séquence de consultation de l'annuaire

Cette séquence est mise en oeuvre automatiquement dès que : (i) l'appareil est éteint et on ouvre le couvercle, ou (ii) on a achevé une numérotation complète, ou (iii) on ouvre le couvercle après une fermeture, sans avoir effectué de nouvelle recherche lorsqu'il était fermé.

L'annuaire se positionne sur le dernier numéro composé (cas (i) et (ii) ci-dessus) ou sur le dernier numéro consulté (cas (iii)). L'écran indique alors par exemple "12/45" sur la seconde ligne.

L'utilisateur peut alors explorer l'annuaire au moyen des touches de fonctions "flèche droite" et "flèche gauche" 11. A chaque pression de touche, l'indicateur de la seconde ligne de l'écran se modifiera (par exemple "13/45" après appui sur la touche de retour arrière) et le nom (ou une partie) du correspondant sera énoncé par le haut-parleur de l'appareil et son numéro affiché sur la première ligne de l'écran.

### 6°) Séquence de suppression de certains noms de l'annuaire

Après avoir exploré l'annuaire de la manière indiquée ci-dessus, ou bien après avoir recherché vocalement un nom donné en l'énonçant devant le microphone 5, l'utilisateur appuie sur la touche de fonction "paire de ciseaux". En réponse, l'appareil va lui demander *"voulez-vous supprimer le nom UNTEL* ?", ce à quoi l'utilisateur répondra "OUI" ou "NON" en appuyant sur la touche de fonction correspondante. Dans l'affirmative, l'appareil émettra un message de confirmation "*le nom UNTEL a été supprimé".*

### 7°) Séquence de changement d'un numéro de téléphone

La séquence se déroule de façon semblable à la séquence de suppression, à la différence que l'utilisateur appuie sur la touche de fonction "crayon-gomme" et qu'il devra introduire le nouveau numéro au moyen du clavier 9. L'ensemble des étapes s'enchaîne avec divers messages successifs *"voulez-vous changer le numéro de téléphone de UNTEL ?" ... "entrez le nouveau numéro de téléphone et* *tapez OUI pour finir"*.

### 8°) Séquence de mise en route, paramétrage et apprentissage

Diverses autres séquences peuvent être éventuellement prévues, telles que par exemple une séquence de prise en main et d'apprentissage, qui guide l'utilisateur la première fois par des messages successifs lui demandant d'indiquer la langue dans laquelle il veut que les messages soient énoncés par l'appareil, d'énoncer son nom et son numéro de téléphone, s'il veut qu'il apprenne un premier nom, etc.

Ainsi, à la première prise en main, après que l'utilisateur ait appuyé sur le bouton, l'appareil énonce *"Hello, please open me* - *Bonjour, ouvrez-moi s'il vous plaît - Buenos dias, abrir me por* *favor".* Après que l'utilisateur ait ouvert le couvercle, il énoncera "*If* *you speak English, press one - Si vous parlez français, tapez sur* *deux - Se habla usted español, toque tres".*

Après que l'utilisateur ait choisi sa langue en appuyant sur la touche correspondante, le dialogue continue : *"Voulez-vous appren**dre à m'utiliser ? Tapez OUI ou NON" ... "Dites votre nom" ...* *"Faut-il mémoriser UNTEL ?" ... "entrez son numéro et tapez OUI* *pour" ... "UNTEL est appris. Refermez le boîtier" ... "Dites* *UNTEL"..."répétez UNTEL et appuyez sur le bouton de côté".*

### 9°) Numérotation nationale et internationale

On peut également, lors de cette phase de première utilisation, demander au propriétaire de l'appareil de donner, outre son numéro, le code téléphonique de son pays, le code pour accéder de son pays à l'international, le code de la zone où il se trouve et le code pour accéder à l'interzone.

Le dialogue est par exemple basé sur les énonciations suivantes : *"Entrez le code international de votre pays, par exemple 33 pour la France" ... "Entrez le code de votre région, par exemple 1 pour Paris et rien pour la province" ... "Entrez le code pour accéder à l'international, par exemple 19 en France" ... "Entrez le code pour accéder à l'interzone, par exemple 16 en France" ... "Y a-t-il un code pour* *prendre la ligne, par exemple le 0 ?" ... "J'ai appris votre numéro de* *téléphone. Si vous voulez téléphoner depuis un autre endroit appuyez sur 1, sinon appuyez sur 2"*.

À ce stade l'appareil saura numéroter de la résidence habituelle.

L'utilisateur devra toujours entrer ses numéros de téléphone comme s'il utilisait le téléphone depuis sa résidence habituelle (avec ou sans le code de zone, d'interzone, etc.).

Si l'utilisateur tape sur '2', les mêmes questions que ci-dessus lui seront posées, mais pour sa résidence temporaire (en remplaçant *"votre..."* par *"... de l'endroit où vous vous trouvez")*

À partir de ces informations, l'automate de numérotation pourra reconnaître automatiquement, d'après la manière dont les numéros sont enregistrés (ils le sont toujours - quel que soit l'endroit où se trouve l'utilisateur - comme si ce dernier appelait depuis sa résidence habituelle) s'il y a lieu ou non d'ajouter un code international, un numéro de pays, un numéro de zone, etc.

Divers perfectionnements peuvent être apportés à l'appareil de l'invention, ainsi qu'à la manière de l'utiliser.

En particulier, du fait de la présence de transducteurs acoustiques (microphone et haut-parleur) dans l'appareil, il est possible de prévoir de manière très simple une transmission de données entre deux appareils ou entre un appareil et un ordinateur équipé de transducteurs acoustiques et émulant le fonctionnement d'un appareil. Cette transmission peut être réalisée entre deux appareils distants (ou un appareil et un ordinateur distant) au travers de la ligne téléphonique, ou même entre deux appareils voisins, en venant appliquer le microphone de l'un des appareils contre le haut-parleur de l'autre, et inversement.

Pour permettre une telle transmission de données, essentiellement pour télécharger, dans un sens ou dans l'autre, le contenu de l'annuaire ou une partie de ce contenu (par exemple pour mise à jour d'une mémoire de données), on utilise les transducteurs de l'appareil et les circuits associés à la manière d'un modem à couplage acoustique. Les données pourront notamment être multiplexées en fréquence et/ou en amplitude et/ou en phase, le codage/décodage des paquets de données et leur multiplexage/démultiplexage se faisant à l'aide d'un processeur intégré à l'appareil, qui peut par ailleurs servir à la reconnaissance vocale.

Cette transmission se fait selon un protocole en lui-même classique, qui peut par exemple être organisé suivant les cinq niveaux suivants :
- niveau 1 : codage des bits ;
- niveau 2 : codage des paquets ;
- niveau 3 : protocole d'échange des paquets ;
- niveau 4 : protocole de session de transmission ;
- niveau 5 (niveau application) : protocole de vérification de la conformité des données en fonction de l'application envisagée.

Les quatre premiers niveaux font en eux-mêmes appel à des techniques classiques, qui font partie des connaissance de l'homme du métier et ne seront pas décrites en détail pour cette raison.

En ce qui concerne le cinquième niveau, propre à l'application, on peut notamment prévoir de commencer la transmission par un paquet spécial précisant la nature des données échangées, un numéro de version du logiciel de l'appareil émetteur (pour un test ultérieur des compatibilités entre versions différentes), la taille mémoire des données que l'appareil se propose de transmettre (pour s'assurer que le récepteur disposera d'une mémoire suffisante, notamment s'il est d'une version antérieure, aux possibilités plus limitées), etc.

Ces données seront transmises et analysées par l'appareil récepteur (ou l'ordinateur récepteur), qui pourra prendre les décisions qui s'imposent: demande de confirmation à l'utilisateur si les données à transmettre dépassent l'espace mémoire disponible, message d'anomalie renvoyé à l'appareil émetteur si la version des données à transmettre ne correspond pas à la version du logiciel de l'appareil ou de l'ordinateur récepteur, etc.

Un autre perfectionnement concerne la manière d'effectuer les comparaisons vectorielles des fonctions de reconnaissance de la parole.

La forme de réalisation particulière du perfectionnement consiste à opérer les calculs de distance et de parcours de la matrice de programmation dynamique par combinaison de logiciel et de matériel. Un matériel spécifique effectue les calculs de distances vectorielles pour une suite de vecteurs rangés de manière continue en mémoire, par exemple huit ou seize vecteurs consécutifs d'un même mot du répertoire. Une fois le calcul effectué, le matériel spécifique génère une interruption ou autre moyen matériel pour prévenir le processeur de la fin de la tâche.

La procédure de traitement des interruptions recharge alors les registres d'adresse de lecture et d'écriture du matériel spécifique de façon à relancer un calcul puis, par logiciel, on effectue les opérations habituelles de reconnaissance de la parole par l'algorithme de programmation dynamique, à savoir :
- addition des distances vectorielles calculées avec les sommes de distances précédentes, de façon à déterminer le meilleur chemin dans la matrice, par exemple équation locale par Itakura (1975) ou Sakoe et Chiba (1978) ;
- application des contraintes globales de façon à rejeter les recherches s'écartant des zones prédéfinies du centre de la matrice, pour accélérer le rejet des mots non significatifs ;
- normalisation des notes attribuées en fonction de la dimension de la matrice, pour que les résultats soient comparables même avec des matrices de tailles différentes.

La figure 14 illustre, de façon schématique, le matériel spécifique permettant de mettre en oeuvre ces fonctionnalités.

Sur cette figure, la référence 21 désigne une batterie de seize registres de huit bits, chargés par le processeur avec chaque vecteur de recherche (quarante fois par seconde) ; ces registres contiennent le vecteur "parlé" que l'on veut comparer à une suite de huit vecteurs de chacun des mots du vocabulaire, et qui seront chargés dans un registre d'entrée référencé 22.

Pour chaque mot à comparer (soit quarante fois par seconde *x* le nombre de mots en mémoire), on charge un registre d'adresse de lecture 23 et un registre d'adresse d'écriture 24 et on fait fonctionner le matériel spécifique de la manière indiquée plus haut. Le registre d'adresse de lecture 23 pointe vers huit vecteurs consécutifs du mot en mémoire à l'endroit où la recherche est en cours (cette adresse est déterminée par logiciel), tandis que le registre d'adresse d'écriture 24 pointe vers un tampon mémoire de huit mots de seize bits où seront rangés les résultats des calculs, c'est-à-dire les huit approximations de distances vectorielles calculées par le matériel.

Le bloc fonctionnel 25 est un module, classique en lui-même, permettant l'arbitrage des accès mémoire entre le processeur et le matériel spécifique de l'invention, en résolvant les conflits dus aux accès concurrents à la mémoire principale. Il est également prévu un accumulateur 26.

La ligne référencée 27 désigne le bus de données local du processeur, qui peut être également le bus général de la mémoire. Les lignes 28 et 29 désignent, respectivement, les bus de données et d'adresses pour l'accès à la mémoire.

Les circuits 30 à 33 désignent respectivement deux soustracteurs, un test de valeur absolue et un additionneur.

Le fonctionnement du circuit est le suivant.

Tout d'abord, par logiciel, on initialise les conditions de calcul des huit distances vectorielles consécutives en mémoire par :
- chargement de la batterie de registres 21 contenant le vecteur analysé à comparer,
- écriture dans le registre 23 de l'adresse mémoire des huit vecteurs consécutifs à comparer, et
- écriture dans le registre 24 de l'adresse mémoire des huit résultats consécutifs à venir.

Ensuite, par le matériel spécifique, on exécute les étapes suivantes :
(a) deux compteurs (non représentés) sont chargés à zéro ;
(b) l'accumulateur 26 est mis à zéro ;
(c) on lit le mot de huit bits dont l'adresse se trouve dans le registre 23 et on en place le contenu dans le registre 22 ;
(d) on incrémente le registre de lecture 23 (ce qui permet, à partir de cet instant, de relire en parallèle la valeur suivante dans le registre d'entrée 22, de manière à gagner du temps) ;
(e) on transfère la valeur du registre d'entrée 22 dans les deux soustracteurs 30 et 31 ;
(f) on place dans les deux soustracteurs la valeur suivante du vecteur d'entrée 21 contenant le vecteur analysé ;
(g) le premier soustracteur effectue l'opération (a-b), le second effectuant l'opération (b-a) ;
(h) le comparateur 32 effectue le calcul de valeur absolue : si la quantité (a-b) présente un bit de signe positif, elle est transférée dans l'additionneur 33, sinon on y transfère (b-a) ;
(i) l'additionneur 33 additionne la valeur trouvée avec le contenu de l'accumulateur 26 ;
(j) on décrémente un compteur (non représenté) assurant un décompte de la position 15 à la position 0 et, si sa valeur est différente de zéro, on reprend à l'étape (c) ci-dessus ;
(k) on écrit la valeur de l'accumulateur 26 à l'adresse contenue dans le registre d'écriture 24 ;
(l) on incrémente le registre d'écriture 24 ;
(m) on décrémente un compteur (non représenté) assurant un décompte de la position 7 à la position 0 et, si sa valeur est différente de zéro, on reprend à l'étape (b) ci-dessus ;
(n) on génère enfin une interruption pour indiquer que la comparaison vectorielle est terminée.

Cette manière de procéder permet d'effectuer rapidement les comparaisons vectorielles en mêlant matériel et logiciel ; elle est beaucoup plus simple et performante que les méthodes entièrement logicielles ou les méthodes recourant à un coprocesseur complet.

## Revendications

1. Un appareil portatif indépendant formant annuaire et composeur téléphonique, comportant :
- une mémoire de données (15), contenant une série de numéros d'appel de correspondants,
- des moyens d'adressage sélectif de cette mémoire (20),
- des moyens composeurs (12), propres à transformer le numéro d'appel adressé de la mémoire en une séquence correspondante de signaux multifréquence d'appel, et
- un premier transducteur acoustique (5), propre à transformer cette séquence de signaux multifréquence en signaux acoustiques, ce transducteur étant susceptible d'être couplé à un microphone de combiné téléphonique,
caractérisé en ce que :
· la mémoire contient en outre, pour chaque numéro d'appel, au moins une information de signature vocale associée,
· il est prévu un second transducteur acoustique (4), propre à capter un nom de correspondant recherché énoncé par l'utilisateur de l'appareil,
· il est prévu des moyens de reconnaissance vocale (19), propres à analyser le nom de correspondant capté par le second transducteur et le transformer en une signature acoustique vocale associée, et
· les moyens d'adressage (20) comprennent des moyens associateurs, propres à retrouver dans la mémoire une information de signature acoustique vocale correspondant à celle fournie par les moyens de reconnaissance vocale et, en cas de concordance, adresser la mémoire sur la position correspondante.

2. L'appareil de la revendication 1, dans lequel il est en outre prévu des moyens à synthèse vocale, propres à générer en réponse un nom mémorisé de correspondant à partir de la signature vocale retrouvée dans la mémoire par les moyens associateurs, de manière à permettre un contrôle par l'utilisateur de l'appareil.

3. L'appareil de la revendication 1 ou 2, dans lequel, après adressage de la mémoire et génération éventuelle du nom de correspondant pour contrôle par l'utilisateur de l'appareil, les moyens composeurs ne sont activés qu'après que l'utilisateur ait actionné une commande spécifique de confirmation.

4. L'appareil de la revendication 3, dans lequel la commande spécifique de confirmation est un bouton-poussoir (3) placé sur cet appareil en une position permettant son actionnement par un doigt de la main tenant l'appareil de manière à permettre, pour la recherche et la composition du numéro retrouvé, une utilisation de l'appareil d'une seule main et sans autre manoeuvre que celle consistant à énoncer le nom recherché et actionner le bouton-poussoir.

5. L'appareil de la revendication 4, dans lequel le bouton-poussoir (3) est un bouton à deux positions, enfoncée et relâchée, et dans lequel un enfoncement du poussoir active les moyens de reconnaissance vocale et un relâchement de celui-ci active les moyens composeurs, cet enfoncement et ce relâchement étant séparés par au moins une étape d'énonciation du nom recherché par l'utilisateur et de reconnaissance fructueuse de ce nom par les moyens de reconnaissance vocale.

6. L'appareil de la revendication 5, dans lequel le second transducteur acoustique (4) n'est activé que tant que le bouton-poussoir (3) est maintenu enfoncé pendant l'étape d'énonciation du nom recherché.

7. L'appareil de la revendication 2, dans lequel, au cas où les moyens associateurs ne retrouvent dans la mémoire aucune information de signature acoustique vocale correspondant à celle fournie par les moyens de reconnaissance vocale, les moyens à synthèse vocale émettent un message d'anomalie prédéterminé.

8. L'appareil de la revendication 2, dans lequel, pour introduire dans la mémoire des numéros de correspondant, il est prévu un clavier numérique (9), des touches de dialogue (10) et une commande spécifique de passage en mode mémorisation et exploitation actionnée par l'utilisateur au cas où les moyens associateurs ne retrouvent dans la mémoire aucune information de signature acoustique vocale correspondant à celle fournie par les moyens de reconnaissance vocale, ou dans le cas où le nom retrouvé ne correspond pas à celui voulu par l'utilisateur.

9. L'appareil de la revendication 8, dans lequel la commande spécifique de passage en mode mémorisation et exploitation est un contact d'ouverture d'un volet d'occultation (6) du clavier numérique (9) et des touches de dialogue (10).

10. L'appareil de la revendication 8, dans lequel la signature acoustique vocale mémorisée après actionnement de la commande spécifique de passage en mode mémorisation et exploitation est celle correspondant au nom énoncé en premier lieu par l'utilisateur, cette signature vocale de référence étant mémorisée temporairement au cas où l'utilisateur énoncerait successivement plusieurs noms avant d'actionner cette commande.

11. L'appareil de la revendication 1, comprenant en outre des moyens pour mémoriser une pluralité d'échantillons vocaux, successivement acquis par les moyens de reconnaissance vocale, d'un même nom de correspondant, pour comparer ces échantillons mémorisés à un nouvel échantillon acquis et pour supprimer les échantillons les moins proches des autres et/ou les moins utilisés au cours des comparaisons successives.

12. L'appareil de la revendication 1, dans lequel la mémoire de données, outre des numéros d'appel de correspondants, contient des codes numériques de type mot de passe.
